# EUROPÄISCHE PATENTSCHRIFT

(11) **EP 4 279 792 B1**
(45) Veröffentlichungstag und Bekanntmachung des Hinweises auf die Patenterteilung: **24.04.2024**
(21) Anmeldenummer: 22174001.2
(22) Anmeldetag: 18.05.2022
(51) Int. Cl.: F16P 3/14

(54) **LICHTVORHANG**
LIGHT CURTAIN
RIDEAU LUMINEUX

(43) Veröffentlichungstag der Anmeldung: 22.11.2023
(73) Patentinhaber: Leuze electronic GmbH + Co. KG, 73277 Owen/Teck (DE)
(72) Erfinder: Feller, Bernhard, 86316 Friedberg (DE); Aldiek, Norbert, 73230 Kirchheim/Teck (DE); Wendel, Simon, 73230 Kirchheim unter Teck (DE); Olbrich, Sebastian, 80992 München (DE); Butzbach, Markus, 73734 Esslingen (DE)
(74) Vertreter: Ruckh, Rainer Gerhard

(56) Entgegenhaltungen:
- WO-A1-86/06816
- US-A1- 2016 327 639

## Beschreibung

Die Erfindung betrifft einen Lichtvorhang.

Derartige Lichtvorhänge werden generell zur Erfassung von Objekten in einem Überwachungsbereich eingesetzt.

Der Lichtvorhang umfasst typischerweise in einem ersten Gehäuse an einem Rand des Überwachungsbereichs eine Reihenanordnung von Lichtstrahlen emittierenden Sendern und in einem zweiten Gehäuse an dem gegenüberliegenden Rand des Überwachungsbereichs eine Reihenanordnung von Lichtstrahlen empfangenden Empfängern.

Der Lichtvorhang weist als Elektronikkomponente eine Auswerteeinheit auf, in welcher in Abhängigkeit von Empfangssignalen des oder der Empfänger ein Objektfeststellungssignal generiert wird. Dieses Objektfeststellungssignal kann insbesondere als binäres Schaltsignal ausgebildet sein, dessen Schaltzustände angeben, ob sich ein Objekt im Überwachungsbereich befindet oder nicht.

Vor Inbetriebnahme müssen in einem Ausrichtbetrieb die Gehäuse des Lichtvorhangs relativ zueinander ausgerichtet werden, damit die Lichtstrahlen der Sender auf die zugeordneten Empfänger treffen.

Dies ist deshalb schwierig, da die Sender typischerweise Lichtstrahlen im Infrarotbereich emittieren, also im nicht sichtbaren Wellenlängenbereich. Damit ist es für eine Bedienperson nicht möglich, den Strahlengang der Lichtstrahlen visuell zu verfolgen, um die Ausrichtung des Lichtvorhangs zu bewerkstelligen.

Um dieses Problem zu lösen werden die Lichtvorhänge mit Ausrichtsendern ausgestattet, die sichtbare Lichtstrahlen emittieren. Die Ausrichtsender sind in einem Gehäuse des Lichtvorhangs integriert oder dort nachträglich angebaut. Die Lichtstrahlen der Ausrichtsender sind auf Markierungen am anderen Gehäuse gerichtet. So kann eine Bedienperson die Ausrichtung der Gehäuse visuell kontrollieren.

Nachteilig ist, dass das Vorsehen der Ausrichtsender und Markierungen einen erheblichen konstruktiven Mehraufwand bedingt.

Die US 2016/0327639 A1 betrifft einen Reflexionslichtvorhang, bei welchem Sender und Empfänger an einem Rand eines Überwachungsbereichs angeordnet sind. Ein Sender und ein zugeordneter Empfänger bilden einen nach einem Impuls-Laufzeitverfahren arbeitenden Distanzsensor.

WO 86/06816 A1 betrifft ein Sicherheitssystem, bei welchem eine Gefahrenzone mit UV-Licht bestrahlt wird. Ein Handschuh, bestehend aus fluoreszierendem Material, generiert, wenn er in der Gefahrenzone angeordnet ist, fluoreszierendes Licht, was mit einem optischen System nachgewiesen wird, wodurch ein entsprechendes Ausgangssignal generiert wird.

Der Erfindung liegt die Aufgabe zugrunde, eine möglichst einfache und exakte Ausrichtung eines Lichtvorhangs zu ermöglichen.

Zur Lösung dieser Aufgabe sind die Merkmale der unabhängigen Ansprüche vorgesehen. Vorteilhafte Ausführungsformen und zweckmäßige Weiterbildungen sind in den abhängigen Ansprüchen vorgesehen.

Die Erfindung betrifft einen Lichtvorhang zur Erfassung von Objekten in einem Überwachungsbereich mit einer Anordnung von Lichtstrahlen emittierenden Sendern und Lichtstrahlen empfangenden Empfängern. Bei freiem Überwachungsbereich passieren die Lichtstrahlen der Sender den Überwachungsbereich und sind jeweils auf einen zugeordneten Empfänger geführt. Bei einem Objekteingriff im Überwachungsbereich ist der Strahlengang der Lichtstrahlen wenigstens eines Senders wenigstens teilweise unterbrochen. In einer Auswerteinheit wird in Abhängigkeit von Empfangssignalen der Empfänger ein Objektfeststellungssignal generiert. Es sind Lichtstrahlen mit unterschiedlichen Strahlprofilen vorgesehen, wobei in einem Ausrichtbetrieb Empfangssignale von Empfängern als Maß für die Ausrichtgüte des Lichtvorhangs ermittelt werden, wobei Lichtstrahlen mit nicht kreisförmigen Strahlprofilen vorhanden sind und Lichtstrahlen mit unterschiedlichen horizontalen oder vertikalen oder schräg orientierten Strahlprofilen vorgesehen sind. Pegel von Empfangssignalen, die durch Lichtstrahlen mit gleichen Strahlprofilen erzeugt werden, werden summiert oder gemittelt.

Die Erfindung betrifft auch ein entsprechendes Verfahren.

Der erfindungsgemäße Lichtvorhang dient zur Erfassung von Objekten in einem Überwachungsbereich.

Der Lichtvorhang weist hierzu zwei getrennte, vorzugsweise jeweils in einem Gehäuse angeordnete Einheiten mit einer Anordnung von Lichtstrahlen emittierenden Sendern und/oder Lichtstrahlen empfangenden Empfängern auf.

Dabei sind die Sender und Empfänger in den Einheiten so angeordnet, dass bei freiem Überwachungsbereich die Lichtstrahlen der Sender jeweils ungehindert auf einen zugeordneten Empfänger treffen. Vorteilhaft bildet dabei jeder Sender mit genau einem zugeordneten Empfänger eine Strahlachse, d.h. ein Sender-Empfänger-Paar.

Bei einem Objekteingriff im Überwachungsbereich wird der Strahlengang der Lichtstrahlen wenigstens einer Strahlachse wenigstens teilweise unterbrochen. Die Unterbrechung von Strahlachsen wird in einer Auswerteeinheit anhand der Empfangssignale der Empfänger erfasst. Abhängig hiervon generiert die Auswerteeinheit ein Objektfeststellungssignal, das vorteilhaft in Form eines binären Schaltsignals ausgebildet ist, dessen Schaltzustände angeben, ob sich ein Objekt im Überwachungsbereich befindet. Es kann auch eine Vermessung der Objektkontur erfolgen und das Ergebnis als Objektfeststellungssignal über eine Schnittstelle z.B. einem Analogsignal ausgegeben werden, d.h. der Begriff Objektfeststellungssignal umfasst auch analoge Signale, die Eigenschaften von Objekten wie Objektkonturen beinhalten.

Die Objekterfassung/-vermessung erfolgt in einem Arbeitsbetrieb. In einem Ausrichtbetrieb erfolgt die Ausrichtung der beiden Einheiten zueinander derart, dass die Lichtstrahlen des Senders auf die zugeordneten Empfänger treffen. Der Ausrichtbetrieb kann generell dann erfolgen, wenn sich kein Objekt im Überwachungsbereich befindet. Besonders vorteilhaft erfolgt der Ausrichtbetrieb zur Inbetriebnahme des Lichtvorhangs.

Gemäß einer ersten Variante weist der Lichtvorhang eine Sendereinheit mit den Lichtstrahlen emittierenden Sendern und eine Empfängereinheit mit den Lichtstrahlen empfangenden Empfängern auf. Die Sendereinheit und die Empfängereinheit sind an gegenüberliegenden Rändern des Überwachungsbereichs angeordnet.

In einem Ausrichtbetrieb wird die Ausrichtgüte der Sendereinheit relativ zur Empfängereinheit ermittelt.

Gemäß einer zweiten Variante weist der Lichtvorhang eine erste Sender-Empfänger-Anordnung mit Sendern und Empfängern an einem ersten Rand des Überwachungsbereichs und eine zweite Sender-Empfänger-Anordnung mit Sendern und Empfängern an einem zweiten, gegenüberliegenden Rand des Überwachungsbereichs auf. Im Ausrichtbetrieb wird die Ausrichtung der Sender-Empfänger-Anordnungen ermittelt.

Vorteilhaft ist in jeder Sender-Empfänger-Anordnung eine alternierende Anordnung von Sendern und Empfängern vorgesehen.

Der Grundgedanke der Erfindung besteht darin, die Lichtstrahlen der Sender, die auch zur Objekterfassung eingesetzt werden, zur Ausrichtung des Lichtvorhangs zu verwenden. Damit kann ein konstruktiver Mehraufwand durch Einsatz zusätzlicher Ausrichtsender, die sichtbaren Lichtstrahlen emittieren, vermieden werden.

Die Sender können dabei Lichtstrahlen im Infrarotbereich emittieren, d.h. im nicht sichtbaren Wellenlängenbereich. Die Sender können von Leuchtdioden, die Empfänger von Photodioden gebildet sein, so dass hinsichtlich der Ausbildung der optoelektronischen Bauelemente kein konstruktiver Mehraufwand erforderlich ist.

Für die Ausrichtung des Lichtvorhangs werden Lichtstrahlen mit unterschiedlichen Strahlprofilen herangezogen. Dabei können im einfachsten Fall nur zwei Lichtstrahlen unterschiedliche Strahlprofile aufweisen.

Weiterhin können nur die Strahlprofile einzelner Lichtstrahlen unterschiedlich sein, wobei insbesondere die Strahlprofile der Lichtstrahlen gemäß einer regelmäßigen Reihenfolge variieren.

Auch ist es möglich, dass alle oder eine Teilmenge von Lichtstrahlen unterschiedliche Strahlprofile aufweisen, dabei können auch Gruppen von Lichtstrahlen mit demselben Strahlprofil vorgesehen sein, welches sich vom Strahlprofil einer anderen Gruppe von Lichtstrahlen unterscheidet.

Schließlich ist es möglich, dass unterschiedliche Empfindlichkeitsprofile von Empfängern vorhanden sind. Die Strahlprofile von Lichtstrahlen und Empfindlichkeitsprofile von Empfängern werden im nachfolgenden als Strahlprofile bezeichnet.

Die Unterschiedlichkeit der Strahlprofile ergibt sich durch richtungsabhängige Charakteristiken der Querschnitte der Lichtstrahlen, wobei die Strahlprofile von einer Kreisform abweichen.

Dabei sind Lichtstrahlen mit unterschiedlichen horizontalen oder vertikalen oder schräg orientierten Strahlprofilen vorgesehen.

Dabei sind die Begriffe horizontal und vertikal relativ zu einer Unterlage definiert, auf welcher der Lichtvorhang aufgestellt ist. Vorteilhaft verlaufen dabei die Längsachsen der Sender-Empfänger-Anordnung bzw. der Sendereinheit und Empfängereinheit in vertikaler Richtung.

Zur Ermittlung der Ausrichtgüte des Lichtvorhangs werden vorteilhaft Pegel von Empfangssignalen ausgewertet.

Gemäß einer vorteilhaften Ausgestaltung emittieren die Sender Lichtstrahlen in Form von Lichtimpulsen. Zur Ermittlung von Pegeln von Empfangssignalen werden Amplituden und/oder Pulsbreiten von Lichtimpulsen ermittelt.

Bei Vorliegen einer Fehlausrichtung, d.h. Abweichungen der Lagen der Sender-Empfänger-Anordnung bzw. der Sendereinheit und/oder Empfängereinheit von deren optimaler Ausrichtung verändern sich die Pegel der Empfangssignale der Empfänger, die Lichtstrahlen mit unterschiedlicher Strahlprofile empfangen, auf unterschiedliche Weise. Durch Analyse der unterschiedlichen Änderungen der Pegel dieser Empfangssignale kann der Grad der Fehlausrichtung und vorzugsweise auch die Richtung der Fehlausrichtung ermittelt werden. Anhand einer Visualisierung dieser Fehlausrichtung kann eine Bedienperson den Lichtvorhang einfach und exakt ausrichten.

Vorteilhaft werden Pegel von Empfangssignalen, die durch Lichtstrahlen mit unterschiedlichen Strahlprofilen erzeugt werden, miteinander verglichen. Dadurch erhaltene Vergleichswerte liefern ein Maß für die Ausrichtgüte.

Damit wird ein exaktes Maß für eine eventuelle Fehlausrichtung des Lichtvorhangs ermittelt.

Erfindungsgemäß werden Pegel von Empfangssignalen, die durch Lichtstrahlen mit gleichen Strahlprofilen erzeugt werden, summiert oder gemittelt.

Dadurch wird eine Mehrfachauswertung einzelner Strahlachsen erhalten, mit der zufällige Fehler eliminiert oder reduziert werden können.

Generell ist es möglich, dass unterschiedliche Strahlprofile von Lichtstrahlen nur in vorgegebenen Entfernungsbereichen vorhanden oder nachweisbar sind.

Bedingt durch den entfernungsabhängigen Verlauf der Strahlquerschnitte der Lichtstrahlen kann es sein, dass die Unterschiede der Strahlprofile der einzelnen Lichtstrahlen erst ab einem Mindestabstand der Sender-Empfänger-Anordnung bzw. der Sendereinheit und der Empfängereinheit in ausreichendem Maße detektierbar sind.

Gemäß einer vorteilhaften Ausgestaltung sind Anzeigemittel vorgesehen, mittels derer die Ausrichtgüte angezeigt wird.

Die Anzeigemittel sind generell optische Anzeigen, wie z.B. sichtbares Licht emittierende Leuchtdioden, die ggf. vorhandene Fehlausrichtungen des Lichtvorhangs anzeigen. Diese Anzeigemittel können an beiden Sender-Empfänger-Anordnungen bzw. an der Sendereinheit und/oder Empfängereinheit des Lichtvorhangs vorgesehen sein.

Insbesondere kann eine quantitative Anzeige der Fehlausrichtung erfolgen, beispielsweise mit einem Feld von Leuchtdioden.

Weiterhin können die Anzeigemittel richtungsabhängige Anzeigen generieren.

Auch das ist mit einem Feld von Leuchtdioden bewerkstelligbar.

Insbesondere können die Anzeigemittel eine optimale Ausrichtung signalisieren, wobei die optimale Ausrichtung von einer Fehlausrichtung mit den Anzeigemitteln optisch hervorgehoben sein kann, insbesondere in Form unterschiedlich farbiger Leuchtdioden.

Schließlich ist es möglich, dass mehrere Anzeigemittel vorgesehen sind, mittels derer für einzelne Bereiche des Lichtvorhangs ermittelte lokale Ausrichtgüten angezeigt werden.

Insbesondere bei Verdrehungen und Verkippungen können einige Bereiche der Sender-Empfänger-Anordnung bzw. der Sendereinheit und Empfängereinheit besser ausgerichtet sein, als andere. Dies kann durch eine ortsaufgelöste Anwendung von Lichtstrahlen mit unterschiedlichen Strahlprofilen erfasst werden und dann mit mehreren lokalen Anzeigemitteln, die in unterschiedlichen Bereichen der Sender-Empfänger-Anordnung bzw. der Sendereinheit und/oder Empfängereinheit angeordnet sind, ortsaufgelöst angezeigt werden.

Die unterschiedlichen Strahlprofile können auf einfache Weise mit mechanischen und/oder optischen Elementen erzeugt werden. Dies kann mit einem geringen Konstruktions- und Kostenaufwand realisiert werden.

Derartige optische Elemente können sowohl den Sendern als auch den Empfängern zugeordnet sein.

Beispielsweise werden unterschiedliche Strahlprofile von Lichtstrahlen mittels nichtkreisförmiger Feldblenden und/oder Aperturblenden und/oder Zwischenblenden erzeugt.

Weiterhin können unterschiedliche Strahlprofile von Lichtstrahlen mittels nicht rotationssymmetrischer Tuben erzeugt werden. Mit Tubus ist hier die mechanische Halterung der optischen und elektronischen Komponenten gemeint, in die eine Blendenfunktion integriert sein kann.

Zudem können unterschiedliche Strahlprofile von Lichtstrahlen dadurch erzeugt werden, dass ein Sender oder Empfänger sowie wenigstens eine Blende und/oder eine Linse quer zur Strahlrichtung der Lichtstrahlen gegeneinander verschoben sind.

Weiterhin können unterschiedliche Strahlprofile von Lichtstrahlen mittels Linsen erzeugt werden, die ausrichtungsabhängig unterschiedlich viel Licht des Senders oder unterschiedlich viel Licht auf den Empfänger abbilden. Dies kann z.B. mit astigmatisch geformten Linsen, außermittig angeordneten asphärischen Linsen oder Freiformlinsen erfolgen.

Ebenso können unterschiedliche Strahlprofile von Lichtstrahlen mittels Linsen mit örtlich variierenden Bedruckungen erzeugt werden.

Die Bedruckungen können Graufilter, Blenden oder auch Gitterstrukturen sein, die generell eine nicht rotationsförmige Form und Struktur aufweisen, wodurch sich nicht kreisförmige Strahlprofile der Lichtstrahlen ergeben. Es ist auch möglich solche Graufilter, Blenden oder auch Gitterstrukturen in den Glaskörper der Linse einzubringen.

Auch ist es möglich, dass unterschiedliche Strahlprofile von Lichtstrahlen mittels Gradienten aufweisenden Graufiltern oder Gitterstrukturen erzeugt werden.

Die Graufilter bzw. Gitterstrukturen bilden dann selbstständige optische Elemente, wobei dann, wenn die Lichtstrahlen diese optischen Elemente durchsetzen, nicht kreisförmige Strahlprofile erzeugt werden. Generell weisen hierzu die Graufilter bzw. Gitterstrukturen einen Gradienten, d.h. ortsabhängig variierende optische Eigenschaften auf.

Der erfindungsgemäße Lichtvorhang kann insbesondere als Sicherheitssensor ausgebildet sein, das heißt der Lichtvorhang weist dann einen fehlersicheren Aufbau auf, so dass er in sicherheitsrelevanten Applikationen, zum Beispiel im Bereich der Arbeitssicherheit, eingesetzt werden kann.

Ein fehlersicherer Aufbau wird insbesondere durch einen redundanten, vorteilhaft zweikanaligen Aufbau der Auswerteeinheit, beispielsweise in Form zweier sich zyklisch gegenseitig überwachenden Rechnereinheiten realisiert.

Wird mit den Rechnereinheiten der Auswerteeinheit ein Fehler festgestellt, geht der Sicherheitssensor in den sicheren Zustand, beispielsweise dadurch, dass dieser ein Objektfeststellungssignal generiert, mit dem eine überwachte, gefahrbringende Maschine abgeschaltet wird.

Die Erfindung wird im Folgenden anhand der Zeichnungen erläutert. Es zeigen:
- Figur 1:: Ausführungsbeispiel des erfindungsgemäßen Sensors in Form eines Lichtvorhangs.
- Figur 2:: Blockschaltbild der Auswerteeinheit des Lichtvorhangs gemäß Figur 1.
- Figur 3:: Erstes Strahlprofil von Lichtstrahlen des Lichtvorhangs gemäß Figur 1
- Figur 4:: Zweites Strahlprofil von Lichtstrahlen des Lichtvorhangs gemäß Figur 1
- Figur 5a:: Erstes Beispiel von einem Sender des Lichtvorhangs zugeordneten optischen Elementen.
- Figur 5b:: Mit den optischen Elementen gemäß Figur 5a erzeugtes Strahlprofil.
- Figur 6a:: Zweites Beispiel von einem Sender des Lichtvorhangs zugeordneten optischen Elementen.
- Figur 6b:: Mit den optischen Elementen gemäß Figur 5a erzeugtes Strahlprofil.
- Figur 7:: Mehrfachanordnung von Linsen für den Lichtvorhang gemäß Figur 1
a) Seitenansicht.
b) Draufsicht.

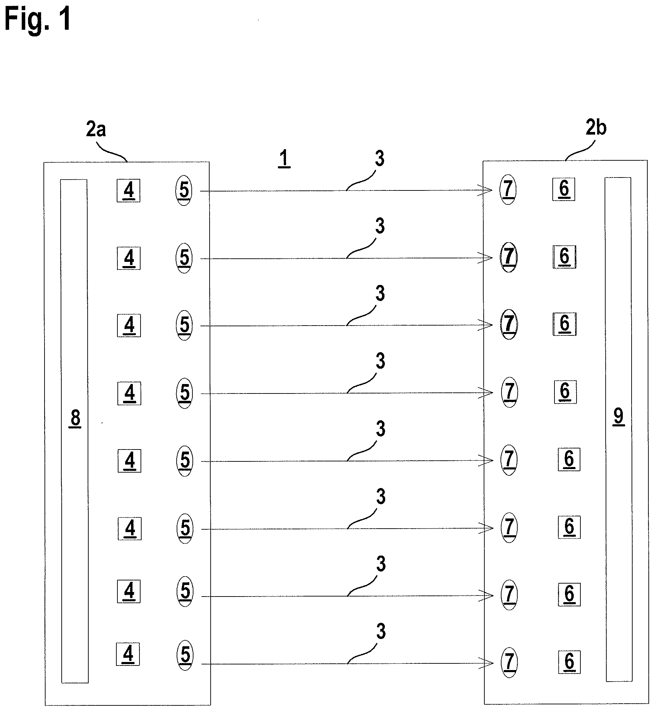

Figur 1 zeigt schematisch den Aufbau eines Ausführungsbeispiels des erfindungsgemäßen Sensors in Form eines Lichtvorhangs 1 zur Erfassung von Objekten innerhalb eines Überwachungsbereichs.

Der Lichtvorhang 1 weist eine Sendereinheit mit einem Gehäuse 2a mit einer Reihenanordnung von Lichtstrahlen 3 emittierenden Sendern 4 als erste Sensorkomponenten und diesen zugeordneten Sendeoptiken 5 auf. Weiterhin weist der Lichtvorhang 1 eine Empfängereinheit mit einem zweiten Gehäuse 2b mit einer Reihenanordnung von Lichtstrahlen 3 empfangenden Empfängern 6 als zweite Sensorkomponenten auf, welchen jeweils eine Empfangsoptik 7 vorgeordnet ist.

Die Sender 4 sind von Leuchtdioden gebildet, die Lichtstrahlen 3 im Infrarotbereich emittieren. Die Empfänger 6 sind von Photodioden oder dergleichen gebildet.

Die Gehäuse 2a, 2b sind an gegenüberliegenden Rändern des Überwachungsbereichs so angeordnet, dass jeweils ein Empfänger 6 einem Sender 4 gegenüberliegend angeordnet ist und mit diesem ein Sender-Empfänger-Paar bildet, wobei die Lichtstrahlen 3 des Senders 4 eine Strahlachse bilden. Im vorliegenden Fall sind acht Strahlachsen vorgesehen. Natürlich kann der Lichtvorhang 1 auch eine andere Zahl von Strahlachsen aufweisen.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 steuert die Empfänger 6 an und wertet deren Empfangssignale zur Generierung eines Objektfeststellungssignals in Form eines binären Schaltsignals aus, dessen Schaltzustände angeben, ob sich ein Objekt im Überwachungsbereich befindet oder nicht. Bei freiem Überwachungsbereich gelangen die Lichtstrahlen 3 der Strahlachsen ungehindert zum Empfänger 6 der jeweiligen Strahlachse. Bei einem Objekteingriff wird wenigstens eine Strahlachse unterbrochen. Die Sendersteuerung 8 und/oder Auswerteeinheit 9 kann einen mehrkanaligen Aufbau aufweisen, falls der Lichtvorhang 1 einen Sicherheitssensor bildet. Insbesondere kann die Sendersteuerung 8 und/oder Auswerteeinheit 9 aus zwei sich zyklisch überwachenden Rechnereinheiten 12 bestehen.

Mit dem als Sicherheitssensor ausgebildeten Lichtvorhang 1 wird beispielsweise ein Gefahrenbereich an einer Maschine überwacht. Nur bei freiem Überwachungsbereich wird der Betrieb der Maschine freigegeben. Wird in der Sendersteuerung 8 oder Auswerteeinheit 9 ein Fehler aufgedeckt, wird ein Schaltsignal im Lichtvorhang 1 derart generiert, dass die Maschine abgeschaltet wird, das heißt es erfolgt ein Übergang in einen sicheren Zustand.

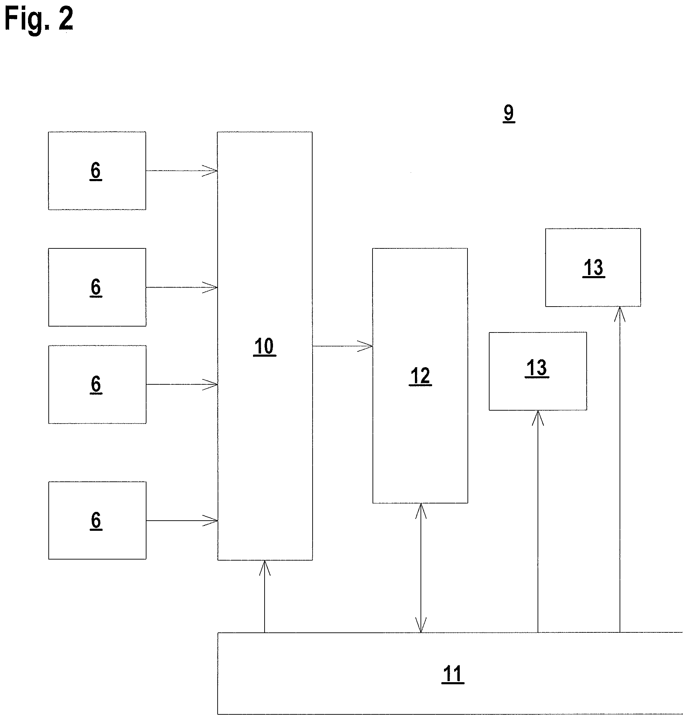

Figur 2 zeigt ein Funktionsdiagramm der Auswerteeinheit 9 des Lichtvorhangs 1 gemäß Figur 1. Die Auswerteeinheit 9 umfasste eine Adressierungs-Einheit 10, in der die Empfangssignale der Empfänger 6, von denen in Figur 2 nur vier dargestellt sind, ausgewählt werden.

Zudem ist eine Ansteuereinheit 11 zur Ansteuerung und Auswahl von Empfängern 6 vorgesehen. In einer Rechnereinheit 12 erfolgt die Auswertung von Empfangssignalen der Empfänger 6.

Von der Ansteuereinheit 11 werden Anzeigeelemente 13 angesteuert. Diese können jeweils von einer oder mehreren Leuchtdioden gebildet sein, die sichtbares Licht emittieren.

Während eines Arbeitsbetriebs erfolgt mit dem Lichtvorhang 1 eine Objekterfassung im Überwachungsbereich. Während eines Ausrichtbetriebs erfolgt die Ausrichtung des Lichtvorhangs 1, d.h. dessen Gehäuse 2a, 2b derart, dass die Lichtstrahlen 3 der Sender 4 auf die zugeordneten Empfänger 6 treffen.

Erfindungsgemäß emittieren zumindest einige der Sender 4 des Lichtvorhangs 1 Lichtstrahlen 3 mit unterschiedlichen nicht kreisförmigen Strahlprofilen.

Durch eine Auswertung der Pegel der Empfangssignale der Empfänger 6, die diese Lichtstrahlen 3 empfangen, können Fehlausrichtungen des Lichtvorhangs 1 erfasst und mit den Anzeigeelementen 13 angezeigt werden, so dass eine Bedienperson den Lichtvorhang 1 ausrichten kann.

Vorteilhaft emittieren die Sender 4 Lichtstrahlen 3 in Form von Lichtimpulsen. Zur Ermittlung von Pegeln von Empfangssignalen werden Amplituden und/oder Pulsbreiten von Lichtimpulsen ermittelt.

Zur Ermittlung der Ausrichtgüte des Lichtvorhangs 1 werden vorteilhaft Pegel von Empfangssignalen, die durch Lichtstrahlen 3 mit unterschiedlichen Strahlprofilen erzeugt werden, miteinander verglichen, wobei dadurch erhaltene Vergleichswerte ein Maß für die Ausrichtgüte liefern.

Weiter vorteilhaft werden Pegel von Empfangssignalen, die durch Lichtstrahlen 3 mit gleichen Strahlprofilen erzeugt werden, summiert oder gemittelt.

Die ermittelte Ausrichtgüte wird mit den Anzeigeelementen 13 angezeigt. Insbesondere können mit den Anzeigeelementen 13 Fehlausrichtungen richtungsabhängig angezeigt werden, beispielsweise mit Feldern von Anzeigeelementen 13. Auch kann insbesondere durch Anzeigeelemente 13, die Licht einer ausgewählten Farbe emittieren, die optimale Ausrichtung des Lichtvorhangs 1 gesondert angezeigt werden.

Schließlich können mehrere Anzeigemittel vorgesehen sein, mittels derer für einzelne Bereiche des Lichtvorhangs 1 ermittelte lokale Ausrichtgüten oder Verschiebungen angezeigt werden.

Die Anzeigemittel können von Anzeigeelementen 13, die in den entsprechenden Bereichen angeordnet sind, gebildet sein. Für die einzelnen Bereiche sind darin jeweils mehrere Lichtstrahlen 3 mit unterschiedlichen Strahlprofilen vorhanden, anhand derer die jeweilige lokale Ausrichtgüte bestimmt wird.

Je nach Applikation können alle Lichtstrahlen 3 oder nur einige Lichtstrahlen 3, wenigstens zwei Lichtstrahlen 3, unterschiedliche Strahlprofile aufweisen.

Dabei ist es möglich, dass die Strahlprofile der Lichtstrahlen 3 gemäß einer regelmäßigen Reihenfolge unterschiedlich sind.

Generell ist es möglich, dass unterschiedliche Strahlprofile von Empfängern 6 vorhanden sind.

Insbesondere können die unterschiedlichen Strahlprofile erst ab einem Mindestabstand zwischen Sendereinheit und Empfängereinheit vorhanden sein.

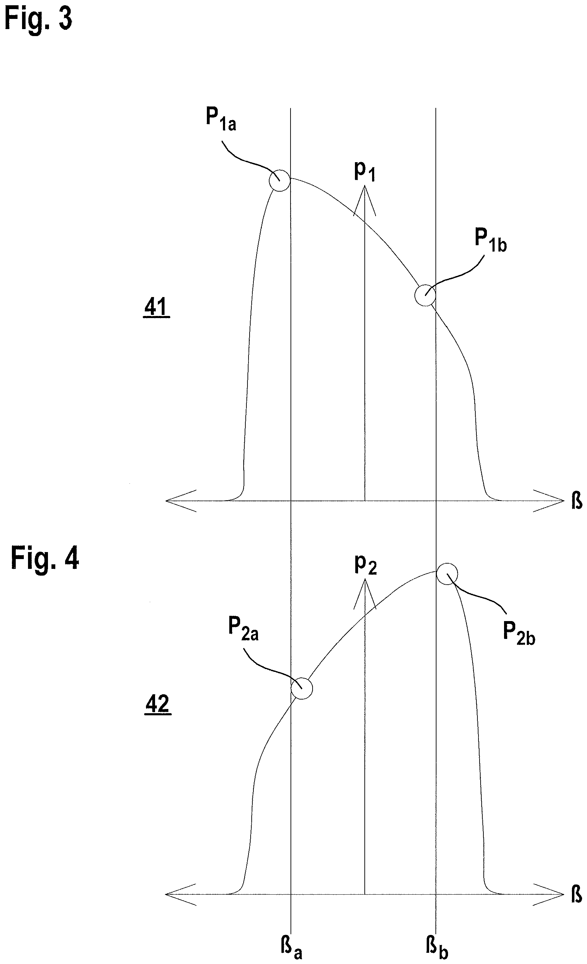

Die Figuren 3, 4 zeigen unterschiedliche Strahlprofile zweier Lichtstrahlen 3 des Lichtvorhangs 1 gemäß Figur 1.

Die Strahlprofile, d.h. Pegel der Lichtstrahlen 3, der Figuren 3 und 4 sind abhängig von einem Winkel β dargestellt. Diese Winkelabhängigkeit kann entlang einer horizontalen, vertikalen oder schräg laufenden Achse gegeben sein. Wie aus dem Vergleich der Figuren 3, 4 ersichtlich, sind die beiden Strahlprofile unterschiedlich, d.h. sie weisen unterschiedliche Winkelabhängigkeiten auf.

Bei einer Ausrichtung der Sendereinheit relativ zur Empfängereinheit auf einen Winkel βₐ wird für das erste Strahlprofil (Figur 3a) am entsprechenden Empfänger 6 der Pegel P₁ₐ der Empfangssignale und für das zweite Strahlprofil (Figur 4a) an zugeordneten Empfängern 6 der Pegel P₂ₐ erhalten.

Aufgrund der unterschiedlichen Strahlprofile sind die Pegel P₁ₐ, P₂ₐ unterschiedlich. Die Bildung der Differenz P₁ₐ - P₂ₐ ist ein Maß für die aktuelle Ausrichtgüte.

Bei einer Ausrichtung der Sendereinheit und Empfängereinheit auf einen Winkel β_{b} wird für das erste Strahlprofil (Figur 3a) am entsprechenden Empfänger 6 der Pegel P_{1b} und für das zweite Strahlprofil ( Figur 4a) am entsprechenden Empfänger 6 der Pegel P_{2b}. Durch die Bildung der Differenz P_{1b} bis P_{2b} kann wieder die aktuelle Ausrichtgüte ermittelt werden.

Aufgrund der Unterschiedlichkeit der Strahlprofile sind auch die Differenzen P₁ₐ - P₂ₐ und P_{1b} - P_{2b} verschieden, so dass die unterschiedlichen Ausrichtungen auf die Winkel βₐ, β_{b} anhand dieser Differenzen unterschieden werden können.

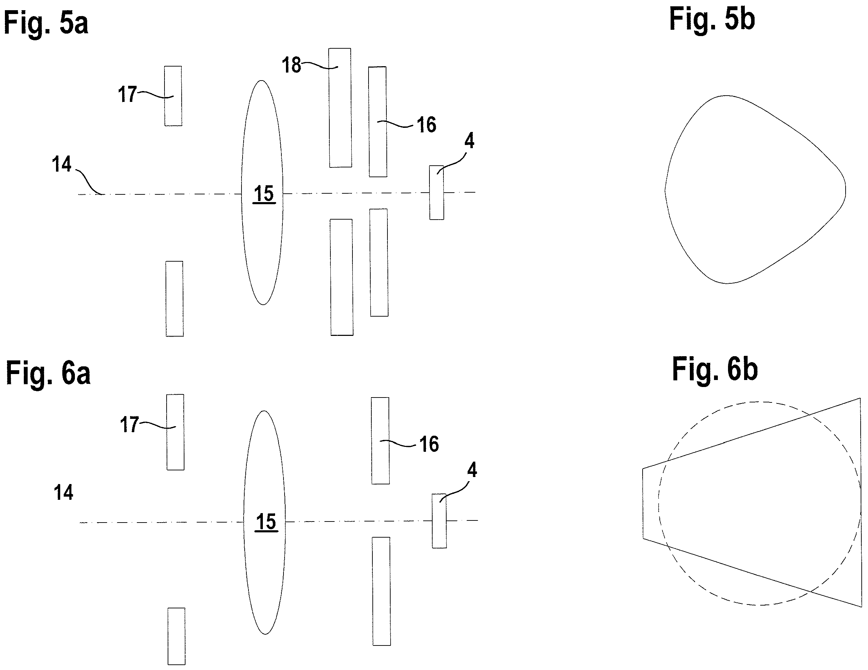

Die Figuren 5a, 6a zeigen zwei Ausführungsformen von mechanischen und optischen Elementen, die zur Erzeugung unterschiedlicher Strahlprofile gemäß den Figuren 5b, 6b dienen.

Dabei ist in Figur 6b gestrichelt ein kreisförmiges Strahlprofil dargestellt, von dem die mit den optischen Elementen gemäß den Figuren 5a, 6a erzeugten Strahlprofile der Figuren 5b, 6b deutlich abweichen.

Die Anordnung gemäß Figur 5a ist einem Sender 4 zugeordnet, der Lichtstrahlen 3 in Richtung einer optischen Achse 14 emittiert.

Als optische Elemente sind eine Linse 15, eine Feldblende 16, eine Aperturblende 17 und eine Zwischenblende 18 vorgesehen.

Zur Generierung eines nicht kreisförmigen Strahlprofils, wie in Figur 5b dargestellt, kann eine astigmatische Linse 15 eingesetzt werden. Alternativ oder zusätzlich können die Feldblende 16, die Aperturblende 17 und/oder die Zwischenblende 18 nicht kreisförmig sein.

Die optischen Elemente der Anordnung gemäß Figur 5a sind symmetrisch zur optischen Achse 14 angeordnet.

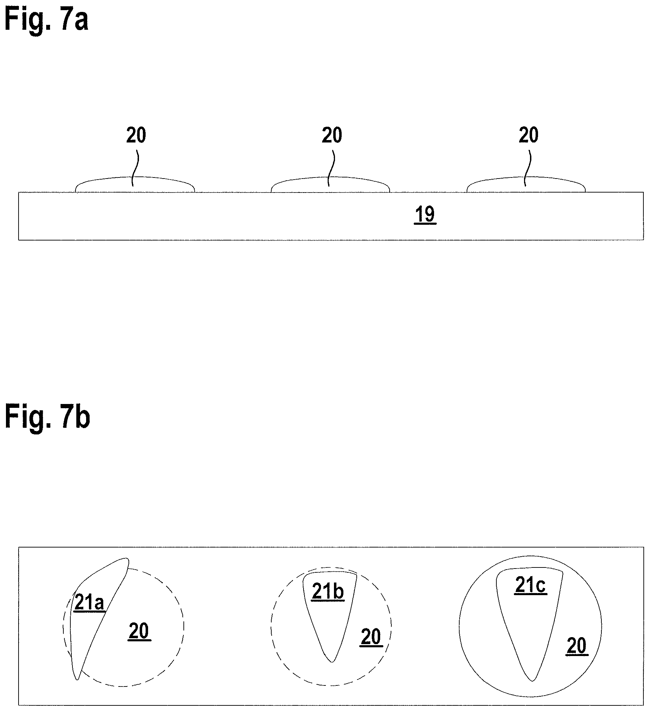

Bei der Anordnung gemäß Figur 6a sind dem Sender 4 als optische Elemente einer Feldblende 16, eine Linse 15 und eine Aperturblende 17 zugeordnet. Das nicht kreisförmige Strahlprofil gemäß Figur 6b wird dadurch erzielt, dass die optischen Elemente quer zur optischen Achse 14 des Senders 4 vorschoben sind. Die Figuren 7a, 7b zeigen eine transparente Platte 19 mit Linsenelementen 20 zur Ausbildung von Sendeoptiken 5. Dabei ist nur ein Ausschnitt mit drei Linsen 15 dargestellt. Die Platte 19 enthält generell eine Anzahl von Linsenelementen 20, die der Anzahl der Sender 4 entspricht.

Wie Figur 7b zeigt, sind auf die Linsenelemente 20 Blendenelemente 21a, 21b, 21c aufgedruckt, mittels derer unterschiedliche, nicht kreisförmige Strahlprofile erzeugt werden.

### Bezugszeichenliste

- (1): Lichtvorhang
- (2a): Gehäuse
- (2b): Gehäuse
- (3): Lichtstrahl
- (4): Sender
- (5): Sendeoptik
- (6): Empfänger
- (7): Empfangsoptik
- (8): Sendersteuerung
- (9): Auswerteeinheit
- (10): Timing-Einheit
- (11): Ansteuereinheit
- (12): Rechnereinheit
- (13): Anzeigeelement
- (14): optische Achse
- (15): Linse
- (16): Feldblende
- (17): Aperturblende
- (18): Zwischenblende
- (19): Platte
- (20): Linsenelement
- (21a): Blendenelement
- (21b): Blendenelement
- (21c): Blendenelement

## Patentansprüche

1. Lichtvorhang (1) zur Erfassung von Objekten in einem Überwachungsbereich mit einer Anordnung von Lichtstrahlen (3) emittierenden Sendern (4) und Lichtstrahlen (3) empfangenden Empfängern (6), wobei bei freiem Überwachungsbereich die Lichtstrahlen (3) der Sender (4) den Überwachungsbereich passieren und jeweils auf einen zugeordneten Empfänger (6) geführt sind, und wobei bei einem Objekteingriff im Überwachungsbereich der Strahlengang der Lichtstrahlen (3) wenigstens eines Senders (4) wenigstens teilweise unterbrochen ist, und mit einer Auswerteinheit, in welcher in Abhängigkeit von Empfangssignalen der Empfänger (6) ein Objektfeststellungssignal generiert wird, **dadurch gekennzeichnet, dass** Lichtstrahlen (3) mit unterschiedlichen Strahlprofilen vorgesehen sind, und dass in einem Ausrichtbetrieb Empfangssignale von Empfängern (6) als Maß für die Ausrichtgüte des Lichtvorhangs (1) ermittelt werden, wobei Lichtstrahlen (3) mit nicht kreisförmigen Strahlprofilen vorhanden sind und wobei Lichtstrahlen (3) mit unterschiedlichen horizontalen oder vertikalen oder schräg orientierten Strahlprofilen vorgesehen sind, und wobei Pegel von Empfangssignalen, die durch Lichtstrahlen (3) mit gleichen Strahlprofilen erzeugt werden, summiert oder gemittelt werden.

2. Lichtvorhang (1) nach Anspruch 1, **dadurch gekennzeichnet, dass** dieser eine Sendereinheit mit den Lichtstrahlen (3) emittierenden Sendern (4) und eine Empfängereinheit mit den Lichtstrahlen (3) empfangenden Empfängern (6) aufweist, wobei die Sendereinheit und die Empfängereinheit an gegenüberliegenden Rändern des Überwachungsbereichs angeordnet sind.

3. Lichtvorhang (1) nach Anspruch 2, **dadurch gekennzeichnet, dass** im Ausrichtbetrieb die Ausrichtgüte der Sendereinheit relativ zur Empfängereinheit ermittelt wird.

4. Lichtvorhang (1) nach Anspruch 1, **dadurch gekennzeichnet, dass** dieser eine erste Sender-Empfänger-Anordnung mit Sendern (4) und Empfängern (6) an einem ersten Rand des Überwachungsbereichs und eine zweite Sender-Empfänger-Anordnung mit Sendern (4) und Empfängern (6) an einen zweiten, gegenüberliegenden Rand des Überwachungsbereichs aufweist, wobei im Ausrichtbetrieb die Ausrichtgüte der Sender-Empfänger-Anordnungen ermittelt wird.

5. Lichtvorhang (1) nach Anspruch 4, **dadurch gekennzeichnet, dass** in jeder Sender-Empfänger-Anordnung eine alternierende Anordnung von Sendern (4) und Empfängern (6) vorgesehen ist.

6. Lichtvorhang (1) nach einem der Ansprüche 1 bis 5, **dadurch gekennzeichnet, dass** zur Ermittlung der Ausrichtgüte Pegel von Empfangssignalen ausgewertet werden.

7. Lichtvorhang (1) nach Anspruch 6, **dadurch gekennzeichnet, dass** Pegel von Empfangssignalen, die durch Lichtstrahlen (3) mit unterschiedlichen Strahlprofilen erzeugt werden, miteinander verglichen werden, wobei dadurch erhaltene Vergleichswerte ein Maß für die Ausrichtgüte liefern.

8. Lichtvorhang (1) nach einem der Ansprüche 1 bis 7, **dadurch gekennzeichnet, dass** die Sender (4) Lichtstrahlen (3) in Form von Lichtimpulsen emittieren, und dass zur Ermittlung von Pegeln von Empfangssignalen Amplituden und/oder Pulsbreiten von Lichtimpulsen ermittelt werden.

9. Lichtvorhang (1) nach einem der Ansprüche 1 bis 8, **dadurch gekennzeichnet, dass** Anzeigemittel vorgesehen sind, mittels der die Ausrichtgüte angezeigt wird.

10. Lichtvorhang (1) nach Anspruch 9, **dadurch gekennzeichnet, dass** die Anzeigemittel richtungsabhängige Anzeigen generieren.

11. Lichtvorhang (1) nach einem der Ansprüche 9 oder 10, **dadurch gekennzeichnet, dass** die Anzeigemittel eine optimale Ausrichtung signalisieren.

12. Lichtvorhang (1) nach einem der Ansprüche 9 bis 11, **dadurch gekennzeichnet, dass** mehrere Anzeigemittel vorgesehen sind, mittels derer für einzelne Bereiche des Lichtvorhangs (1) ermittelte lokale Ausrichtgüten angezeigt werden.

13. Lichtvorhang (1) nach einem der Ansprüche 1 bis 15 1 bis 12, **dadurch gekennzeichnet, dass** nur die Strahlprofile einzelner Lichtstrahlen (3) unterschiedlich sind.

14. Lichtvorhang (1) nach einem der Ansprüche 1 bis 13, **dadurch gekennzeichnet, dass** die Strahlprofile der Lichtstrahlen (3) gemäß einer regelmäßigen Reihenfolge unterschiedlich sind.

15. Lichtvorhang (1) nach einem der Ansprüche 1 bis 14, **dadurch gekennzeichnet, dass** unterschiedliche Empfindlichkeitsprofile von Empfängern (6) vorhanden sind.

16. Lichtvorhang (1) nach einem der Ansprüche 1 bis 15, **dadurch gekennzeichnet, dass** unterschiedliche Strahlprofile von Lichtstrahlen (3) nur in vorgegebenen Entfernungsbereichen vorhanden oder nachweisbar sind.

17. Lichtvorhang (1) nach einem der Ansprüche 1 bis 16, **dadurch gekennzeichnet, dass** unterschiedliche Strahlprofile von Lichtstrahlen (3) mittels nichtkreisförmiger Feldblenden (16) und/oder Aperturblenden (17) und/oder Zwischenblenden (18) erzeugt werden.

18. Lichtvorhang (1) nach einem der Ansprüche 1 bis 17, **dadurch gekennzeichnet, dass** unterschiedliche Strahlprofile von Lichtstrahlen (3) mittels nicht rotationssymmetrischer Tuben erzeugt werden.

19. Lichtvorhang (1) nach einem der Ansprüche 1 bis 18, **dadurch gekennzeichnet, dass** unterschiedliche Strahlprofile von Lichtstrahlen (3) dadurch erzeugt werden, dass ein Sender (4) oder Empfänger (6) sowie wenigstens eine Blende und/oder eine Linse (15) quer zur optischen Achse (14) der Lichtstrahlen (3) gegeneinander verschoben sind.

20. Lichtvorhang (1) nach einem der Ansprüche 1 bis 19, **dadurch gekennzeichnet, dass** unterschiedliche Strahlprofile von Lichtstrahlen (3) mittels astigmatischen Linsen (15) oder Freiformlinsen erzeugt werden.

21. Lichtvorhang (1) nach einem der Ansprüche 1 bis 20, **dadurch gekennzeichnet, dass** unterschiedliche Strahlprofile von Lichtstrahlen (3) mittels Linsen (15) mit räumlich variierenden Bedruckungen erzeugt werden.

22. Lichtvorhang (1) nach einem der Ansprüche 1 bis 21, **dadurch gekennzeichnet, dass** unterschiedliche Strahlprofile von Lichtstrahlen (3) mittels Gradienten aufweisenden Graufiltern oder Gitterstrukturen erzeugt werden.

23. Lichtvorhang (1) nach einem der Ansprüche 1 bis 22, **dadurch gekennzeichnet, dass** dieser ein Sicherheitssensor ist.

24. Verfahren zur Erfassung von Objekten in einem Überwachungsbereich mittels eines Lichtvorhangs (1) mit einer Anordnung von Lichtstrahlen (3) emittierenden Sendern (4) und Lichtstrahlen (3) empfangenden Empfängern (6), wobei bei freiem Überwachungsbereich die Lichtstrahlen (3) der Sender (4) den Überwachungsbereich passieren und jeweils auf einen zugeordneten Empfänger (6) geführt sind, und wobei bei einem Objekteingriff im Überwachungsbereich der Strahlengang der Lichtstrahlen (3) wenigstens eines Senders (4) wenigstens teilweise unterbrochen ist, und mit einer Auswerteinheit, in welcher in Abhängigkeit von Empfangssignalen der Empfänger (6) ein Objektfeststellungssignal generiert wird, **dadurch gekennzeichnet, dass** Lichtstrahlen (3) mit unterschiedlichen Strahlprofilen vorgesehen sind, und dass in einem Ausrichtbetrieb Empfangssignale von Empfängern (6) als Maß für die Ausrichtgüte des Lichtvorhangs (1) ermittelt werden, wobei Lichtstrahlen (3) mit nicht kreisförmigen Strahlprofilen vorhanden sind und wobei Lichtstrahlen (3) mit unterschiedlichen horizontalen oder vertikalen oder schräg orientierten Strahlprofilen vorgesehen sind, und wobei Pegel von Empfangssignalen, die durch Lichtstrahlen (3) mit gleichen Strahlprofilen erzeugt werden, summiert oder gemittelt werden.

## Claims

1. A light curtain (1) for detecting objects in a surveillance area, having an arrangement of transmitters (4) emitting light beams (3) and receivers (6) receiving light beams (3), wherein, when the surveillance area is free, the light beams (3) of the transmitters (4) pass through the surveillance area and are each guided to an associated receiver (6), and wherein, when an object is detected in the monitoring area, the beam path of the light beams (3) of at least one transmitter (4) is at least partially interrupted, and with an evaluation unit in which an object detection signal is generated as a function of the reception signals of the receivers (6),
**characterised in that** light beams (3) with different beam profiles are provided, and **in that**, in an alignment mode, received signals from receivers (6) are determined as a measure of the alignment quality of the light curtain (1), wherein light beams (3) with non-circular beam profiles are provided and wherein light beams (3) with different horizontal or vertical or obliquely orientated beam profiles are provided, and wherein levels of received signals generated by light beams (3) with the same beam profiles are summed or averaged.

2. A light curtain (1) according to claim 1, **characterised in that** it has a transmitter unit with transmitters (4) emitting the light beams (3) and a receiver unit with receivers (6) receiving the light beams (3), the transmitter unit and the receiver unit being arranged at opposite edges of the monitoring area.

3. A light curtain (1) according to claim 2, **characterised in that** the alignment quality of the transmitter unit relative to the receiver unit is determined in alignment mode.

4. A light curtain (1) according to claim 1, **characterised in that** it has a first transmitter-receiver arrangement with transmitters (4) and receivers (6) at a first edge of the monitoring area and a second transmitter-receiver arrangement with transmitters (4) and receivers (6) at a second, opposite edge of the monitoring area, the alignment quality of the transmitter-receiver arrangements being determined in alignment mode.

5. A light curtain (1) according to claim 4, **characterised in that** an alternating arrangement of transmitters (4) and receivers (6) is provided in each transmitter-receiver arrangement.

6. A light curtain (1) according to one of claims 1 to 5, **characterised in that** levels of received signals are evaluated to determine the alignment quality.

7. A light curtain (1) according to claim 6, **characterised in that** levels of received signals which are generated by light beams (3) with different beam profiles are compared with one another, the comparison values obtained thereby providing a measure of the alignment quality.

8. A light curtain (1) according to one of claims 1 to 7, **characterised in that** the transmitters (4) emit light beams (3) in the form of light pulses, and **in that** amplitudes and/or pulse widths of light pulses are determined in order to determine levels of received signals.

9. A light curtain (1) according to one of claims 1 to 8, **characterised in that** display means are provided by means of which the alignment quality is displayed.

10. A light curtain (1) according to claim 9, **characterised in that** the display means generate direction-dependent displays.

11. A light curtain (1) according to one of claims 9 or 10, **characterised in that** the display means signal an optimum alignment.

12. A light curtain (1) according to one of claims 9 to 11, **characterised in that** a plurality of display means are provided, by means of which local alignment values determined for individual areas of the light curtain (1) are displayed.

13. A light curtain (1) according to one of claims 1 to 12, **characterised in that** only the beam profiles of individual light beams (3) are different.

14. A light curtain (1) according to one of claims 1 to 13, **characterised in that** the beam profiles of the light beams (3) are different according to a regular sequence.

15. A light curtain (1) according to one of claims 1 to 14, **characterised in that** different sensitivity profiles of receivers (6) are present.

16. A light curtain (1) according to one of claims 1 to 15, **characterised in that** different beam profiles of light beams (3) are only present or detectable in predetermined distance ranges.

17. A light curtain (1) according to one of claims 1 to 16, **characterised in that** different beam profiles of light beams (3) are generated by means of non-circular field diaphragms (16) and/or aperture diaphragms (17) and/or intermediate diaphragms (18).

18. A light curtain (1) according to one of claims 1 to 17, **characterised in that** different beam profiles of light beams (3) are generated by means of non-rotationally symmetrical tubes.

19. A light curtain (1) according to one of claims 1 to 18, **characterised in that** different beam profiles of light beams (3) are generated **in that** a transmitter (4) or receiver (6) and at least one diaphragm and/or a lens (15) are displaced relative to one another transversely to the optical axis (14) of the light beams (3).

20. A light curtain (1) according to one of claims 1 to 19, **characterised in that** different beam profiles of light beams (3) are generated by means of astigmatic lenses (15) or free-form lenses.

21. A light curtain (1) according to one of claims 1 to 20, **characterised in that** different beam profiles of light beams (3) are generated by means of lenses (15) with spatially varying imprints.

22. A light curtain (1) according to one of claims 1 to 21, **characterised in that** different beam profiles of light beams (3) are generated by means of grey filters or grating structures having gradients.

23. A light curtain (1) according to one of claims 1 to 22, **characterised in that** this is a safety sensor.

24. A method for detecting objects in a monitoring area by means of a light curtain (1) with an arrangement of transmitters (4) emitting light beams (3) and receivers (6) receiving light beams (3), wherein, when the monitoring area is free, the light beams (3) of the transmitters (4) pass through the monitoring area and are each guided to an associated receiver (6), and wherein the beam path of the light beams (3) of at least one transmitter (4) is at least partially interrupted when an object is detected in the monitoring area, and with an evaluation unit in which an object detection signal is generated as a function of received signals from the receivers (6), **characterised in that** light beams (3) with different beam profiles are provided, and **in that**, in an alignment mode, received signals from receivers (6) are determined as a measure of the alignment quality of the light curtain (1), wherein light beams (3) with non-circular beam profiles are provided and wherein light beams (3) with different horizontal or vertical or obliquely orientated beam profiles are provided, and wherein levels of received signals generated by light beams (3) with the same beam profiles are summed or averaged.

## Revendications

1. Rideau lumineux (1) pour la détection d'objets dans une zone de surveillance, comportant un ensemble d'émetteurs (4) émettant des faisceaux lumineux (3) et de récepteurs (6) recevant des faisceaux lumineux (3), dans lequel, lorsque la zone de surveillance est libre, les faisceaux lumineux (3) des émetteurs (4) traversent la zone de surveillance et sont chacun guidés vers un récepteur associé (6), et dans lequel, lorsqu'un objet est détecté dans la zone de surveillance, le trajet des faisceaux lumineux (3) d'au moins un émetteur (4) est au moins partiellement interrompu, et avec une unité d'évaluation dans laquelle un signal de détection d'objet est généré en fonction des signaux de réception des récepteurs (6),
**caractérisé en ce que** des faisceaux lumineux (3) avec différents profils de faisceau sont prévus, et **en ce que**, dans un mode d'alignement, les signaux reçus des récepteurs (6) sont déterminés comme une mesure de la qualité de l'alignement du rideau lumineux (1), dans lequel des faisceaux lumineux (3) avec des profils de faisceau non circulaires sont fournis et dans lequel des faisceaux lumineux (3) avec différents profils de faisceau horizontaux ou verticaux ou orientés obliquement sont fournis, et dans lequel les niveaux des signaux reçus générés par des faisceaux lumineux (3) avec les mêmes profils de faisceau sont additionnés ou moyennés.

2. Rideau lumineux (1) selon la revendication 1, **caractérisé en ce qu'**il possède une unité émettrice avec des émetteurs (4) émettant les faisceaux lumineux (3) et une unité réceptrice avec des récepteurs (6) recevant les faisceaux lumineux (3), l'unité émettrice et l'unité réceptrice étant disposées sur les bords opposés de la zone de surveillance.

3. Rideau lumineux (1) selon la revendication 2, **caractérisé en ce que** la qualité d'alignement de l'unité émettrice par rapport à l'unité réceptrice est déterminée en mode alignement.

4. Rideau lumineux (1) selon la revendication 1, **caractérisé en ce qu'**il comporte un premier ensemble émetteur-récepteur avec des émetteurs (4) et des récepteurs (6) sur un premier bord de la zone de surveillance et un deuxième ensemble émetteur-récepteur avec des émetteurs (4) et des récepteurs (6) sur un deuxième bord opposé de la zone de surveillance, la qualité d'alignement des ensembles émetteur-récepteur étant déterminée en mode d'alignement.

5. Rideau lumineux (1) selon la revendication 4, **caractérisé en ce qu'**une disposition alternée d'émetteurs (4) et de récepteurs (6) est prévue dans chaque ensemble émetteur-récepteur.

6. Rideau lumineux (1) selon l'une des revendications 1 à 5, **caractérisé en ce que** les niveaux des signaux reçus sont évalués pour déterminer la qualité de l'alignement.

7. Rideau lumineux (1) selon la revendication 6, **caractérisé en ce que** les niveaux des signaux reçus qui sont générés par des faisceaux lumineux (3) avec des profils de faisceau différents sont comparés les uns aux autres, les valeurs de comparaison obtenues fournissant ainsi une mesure de la qualité de l'alignement.

8. Rideau lumineux (1) selon l'une des revendications 1 à 7, **caractérisé en ce que** les émetteurs (4) émettent des faisceaux lumineux (3) sous forme d'impulsions lumineuses, et **en ce que** les amplitudes et/ou les largeurs d'impulsion des impulsions lumineuses sont déterminées afin de déterminer les niveaux des signaux reçus.

9. Rideau lumineux (1) selon l'une des revendications 1 à 8, **caractérisé en ce que** des moyens d'affichage sont prévus au moyen desquels la qualité de l'alignement est affichée.

10. Rideau lumineux (1) selon la revendication 9, **caractérisé en ce que** les moyens d'affichage génèrent des affichages dépendant de la direction.

11. Rideau lumineux (1) selon l'une des revendications 9 ou 10, **caractérisé en ce que** les moyens d'affichage signalent un alignement optimal.

12. Rideau lumineux (1) selon l'une des revendications 9 à 11, **caractérisé en ce que** plusieurs moyens d'affichage sont prévus, au moyen desquels les valeurs d'alignement locales déterminées pour des zones individuelles du rideau lumineux (1) sont affichées.

13. Rideau lumineux (1) selon l'une des revendications 1 à 12, **caractérisé en ce que** seuls les profils des faisceaux lumineux individuels (3) sont différents.

14. Rideau lumineux (1) selon l'une des revendications 1 à 13, **caractérisé en ce que** les profils des faisceaux lumineux (3) sont différents selon une séquence régulière.

15. Rideau lumineux (1) selon l'une des revendications 1 à 14, **caractérisé en ce que** différents profils de sensibilité des récepteurs (6) sont présents.

16. Rideau lumineux (1) selon l'une des revendications 1 à 15, **caractérisé en ce que** les différents profils de faisceaux lumineux (3) ne sont présents ou détectables que dans des plages de distance prédéterminées.

17. Rideau lumineux (1) selon l'une des revendications 1 à 16, **caractérisé en ce que** différents profils de faisceaux lumineux (3) sont générés au moyen de diaphragmes de champ non circulaires (16) et/ou de diaphragmes d'ouverture (17) et/ou de diaphragmes intermédiaires (18).

18. Rideau lumineux (1) selon l'une des revendications 1 à 17, **caractérisé en ce que** différents profils de faisceaux lumineux (3) sont générés au moyen de tubes à symétrie non rotative.

19. Rideau lumineux (1) selon l'une des revendications 1 à 18, **caractérisé en ce que** différents profils de faisceaux lumineux (3) sont générés **en ce qu'**un émetteur (4) ou un récepteur (6) et au moins un diaphragme et/ou une lentille (15) sont déplacés l'un par rapport à l'autre transversalement à l'axe optique (14) des faisceaux lumineux (3).

20. Rideau lumineux (1) selon l'une des revendications 1 à 19, **caractérisé en ce que** différents profils de faisceaux lumineux (3) sont générés au moyen de lentilles astigmates (15) ou de lentilles à forme libre.

21. Rideau lumineux (1) selon l'une des revendications 1 à 20, **caractérisé en ce que** différents profils de faisceaux lumineux (3) sont générés au moyen de lentilles (15) dont les empreintes varient dans l'espace.

22. Rideau lumineux (1) selon l'une des revendications 1 à 21, **caractérisé en ce que** différents profils de faisceaux lumineux (3) sont générés au moyen de filtres gris ou de structures de réseaux présentant des gradients.

23. Rideau lumineux (1) selon l'une des revendications 1 à 22, **caractérisé en ce qu'**il s'agit d'un capteur de sécurité.

24. Procédé de détection d'objets dans une zone de surveillance au moyen d'un rideau lumineux (1) comportant un ensemble d'émetteurs (4) émettant des faisceaux lumineux (3) et de récepteurs (6) recevant des faisceaux lumineux (3), dans lequel, lorsque la zone de surveillance est libre, les faisceaux lumineux (3) des émetteurs (4) traversent la zone de surveillance et sont chacun guidés vers un récepteur associé (6), et dans lequel le trajet des faisceaux lumineux (3) d'au moins un émetteur (4) est au moins partiellement interrompu lorsqu'un objet est détecté dans la zone de surveillance, et avec une unité d'évaluation dans laquelle un signal de détection d'objet est généré en fonction des signaux reçus des récepteurs (6), **caractérisé en ce que** des faisceaux lumineux (3) avec différents profils de faisceau sont fournis, et **en ce que**, dans un mode d'alignement, les signaux reçus des récepteurs (6) sont déterminés comme une mesure de la qualité de l'alignement du rideau lumineux (1), dans lequel des faisceaux lumineux (3) avec des profils de faisceau non circulaires sont fournis et dans lequel des faisceaux lumineux (3) avec différents profils de faisceau horizontaux ou verticaux ou orientés obliquement sont fournis, et dans lequel les niveaux des signaux reçus générés par des faisceaux lumineux (3) avec les mêmes profils de faisceau sont additionnés ou moyennés.
